# EUROPEAN PATENT SPECIFICATION

(11) **EP 4 112 281 B1**
(45) Date of publication and mention of the grant of the patent: **06.11.2024**
(21) Application number: 22176139.8
(22) Date of filing: 30.05.2022
(51) Int. Cl.: B29C 65/18, B29C 65/74, B65B 9/207, B65B 51/30, B65B 57/02, B65B 57/10, B65B 57/18, B65B 1/34, B65B 9/213, B65B 57/08, B65B 59/04, B65B 5/06, B65B 61/26, B29L 31/00

(54) **BAG-MAKING AND PACKAGING MACHINE**
BEUTELHERSTELLUNGS- UND VERPACKUNGSMASCHINE
MACHINE DE FABRICATION DE SACS ET DE CONDITIONNEMENT

(30) Priority: 01.07.2021 JP 2021110358
(43) Date of publication of application: 04.01.2023
(73) Proprietor: ISHIDA CO., Ltd., Kyoto-shi, Kyoto 606-8392 (JP)
(72) Inventor: NAGASHIMA, Ryota, Ritto-shi, Shiga 520-3026 (JP); FUJIHARA, Hiroki, Ritto-shi, Shiga 520-3026 (JP)
(74) Representative: Gill Jennings & Every LLP

(56) References cited:
- JP-A- 2016 107 997
- JP-B2- 4 589 899
- US-A- 5 836 136
- US-B2- 10 934 033

## Description

### TECHNICAL FIELD

The present invention relates to a bag-making and packaging machine.

### BACKGROUND ART

A bag-making and packaging machine is known which, as disclosed in JP-ANo. 2016-107997, drops articles into a film that has been formed into a tubular shape and seals the film to thereby make bags. The bag-making and packaging machine of JP-A No. 2016-107997 includes determining means that determines seal defects. When a seal defect is determined by the determining means, a packaging control unit performs predetermined processes such as suspending activation of a cutter of transverse sealing means to make a chain of packaged products including a part in which foreign matter is entrapped (jammed), and/or temporarily stopping some operating mechanisms such as the transverse sealing means or an entire bag-making and filling machine and issuing an alert, and/or discharging, on the downstream side to the outside of the system, the packaged product determined to have foreign matter entrapped in it.

Further bag-making and packaging machines may be found in US 5836136 A, JP 4589899B2 and US 10934033 B2. US 5836136 A discloses that the integrity of a seal in packaging film is monitored during packaging of loose, free flowing product and adaptive control of the packaging method/apparatus is provided in response to the determination made. The pressure being exerted between the sealing jaws upon reaching a closed position and the seal being formed is monitored and analyzed to evaluate the seal integrity in a dedicated microprocessor. An adaptive, real time signal is provided to a CPU/controller to adjust the relative product flow and packaging film movement.

### BRIEF SUMMARY

However, the present inventor discovered the problem that there are cases where there is a reduction in the quality of the bags manufactured by the bag-making and packaging machine of patent document JP-A 2016-107997 and cases where there is a reduction in the operating rate of the bag-making and packaging machine.

It is a goal of the present invention to provide a bag-making and packaging machine that inhibits a reduction in the quality of the bag it manufactures and inhibits a reduction in its operating rate.

A bag-making and packaging machine pertaining to a first aspect of the present invention forms a sheet-like film into a tubular shape and transversely seals the film to thereby manufacture a bag containing an article, the bag-making and packaging machine including a transverse sealing mechanism and a control unit. The transverse sealing mechanism pinches and transversely seals the tubular film that has been formed into a tubular shape to form a transverse seal portion. The control unit determines whether or not there is jamming in the transverse seal portion and, in a case where it has determined that there is jamming, switches between a first bag-making process to continue bag-making operation and a second bag-making process to stop bag-making operation based on the state of jamming.

The present inventor discovered that the problem that there are cases where there is a reduction in the quality of the bag manufactured by the bag-making and packaging machine of patent document JP-A 2016-107997 and cases where there is a reduction in the operating rate of the bag-making and packaging machine is based on the following primary cause. Specifically, in a case where a bag is determined to have a seal defect and is made into a chain bag, if the bag tears and an article comes out from the bag the article sticks to a member that perform transverse sealing. If the manufacturing of the bag is continued in this state, the article sticks to the bag that is subsequently manufactured and the quality of the bag is reduced. If, to prevent this, bag-making operation by the bag-making and packaging machine are stopped when a bag is determined to have a seal defect, the operating rate ends up being reduced.

Thus, as a result of diligent consideration to achieve a balance between inhibiting a reduction in quality and inhibiting a reduction in the operating rate, the present inventor came upon the idea of changing, in a case where it has been determined that there is jamming of an article when transverse sealing has been performed, the bag-making process based on the state of jamming, and thus completed the present invention.

The bag-making and packaging machine of the first aspect includes the control unit that switches between the first bag-making process to continue bag-making operation and the second bag-making process to stop bag-making operation based on the state of jamming. The bag-making and packaging machine includes a cutting mechanism that cuts the transverse seal portion. The control unit performs, as the first bag-making process, a process to cease the cutting of the transverse seal portion by the cutting mechanism and manufacture a chain bag in which a plurality of bags are interconnected. For this reason, the control unit can perform the first bag-making process for inhibiting a reduction in the operating rate and the second bag-making process for inhibiting a reduction in quality based on the state of jamming. Consequently, there can be provided a bag-making and packaging machine that inhibits a reduction in the quality of the bags it manufactures and inhibits a reduction in its operating rate. When the state of jamming is one where something relatively small is entrapped, the control unit manufactures a chain bag without stopping bag-making operation. In this way, in the case of small jamming, a reduction in the operating rate can be inhibited because the control unit continues bag-making operation. Furthermore, by making into a chain bag with a bag having something entrapped in its transverse seal portion, the bag can be easily discriminated as a defective product.

A bag-making and packaging machine pertaining to a second aspect of the present invention is the bag-making and packaging machine pertaining to the first aspect, wherein the control unit switches between the first bag-making process and the second bag-making process based on at least two determination values.

In the bag-making and packaging machine pertaining to the second aspect, the control unit has determination values relating to the state of jamming. For this reason, by setting a determination value for when something relatively large is entrapped and a determination value for when something relatively small is entrapped (jammed), the state of jamming can be easily determined based on the plural determination values.

A bag-making and packaging machine pertaining to a third aspect of the present invention is the bag-making and packaging machine pertaining to the first aspect or the second aspect, wherein at least one of the first bag-making process and the second bag-making process includes a process to change the bag-making capacity.

In the bag-making and packaging machine pertaining to the third aspect, the control unit performs a process to automatically change the bag-making capacity after it has performed a process to manufacture a chain bag, for example, as the first bag-making process, and/or after it has performed a process to stop bag-making operation, for example, as the second bag-making process. Because of this, occurrences of jamming can be reduced.

A bag-making and packaging machine pertaining to a fourth aspect of the present invention is the bag-making and packaging machine pertaining to the second aspect, wherein the first bag-making process displays an indication that a first determination value has been exceeded.

In the bag-making and packaging machine of the fourth aspect, a display of an indication that the first determination value has been exceeded can be performed while bag-making operation is continued based on the state of jamming. For this reason, the user can be made aware of the state of jamming.

According to the present invention, there can be provided a bag-making and packaging machine that inhibits a reduction in the quality of the bags it manufactures and inhibits a reduction in its operating rate.

### BRIEF DESCRIPTION OF THE DRAWINGS

FIG. 1 is a perspective view of a packaging machine including a bag-making and packaging machine of an embodiment;
FIG. 2 is a schematic diagram of the packaging machine including the bag-making and packaging machine of the embodiment;
FIG. 3 is a schematic diagram showing bags manufactured in the embodiment;
FIG. 4 is a block diagram of the bag-making and packaging machine of the embodiment;
FIG. 5 is a side view of a transverse sealing mechanism of the embodiment;
FIG. 6 is a side view of paths traced by sealing jaws of the embodiment;
FIG. 7 is a flowchart showing control steps executed by a control unit of the embodiment;
FIG. 8 is a drawing for describing switching between a first bag-making process and a second bag-making process by the control unit of the embodiment; and
FIG. 9 is a block diagram of the bag-making and packaging machine of an example modification.

### DETAILED DESCRIPTION

A bag-making and packaging machine 100 pertaining to an embodiment of the present invention will be described below. It will be noted that, in the following description, expressions such as "front (front-facing)," "rear (back-facing)," "upper," "lower," "left," and "right" are sometimes used to indicate directions and the like. Unless otherwise specified, "front," "rear," "upper," "lower," "left," and "right" here follow the directions of the arrows added to the drawings.

### (1) Overview

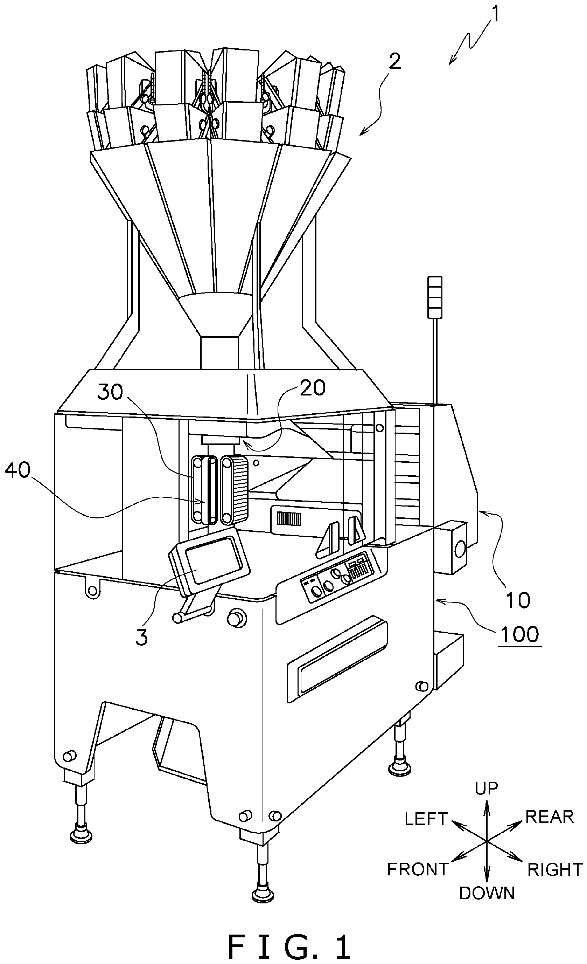

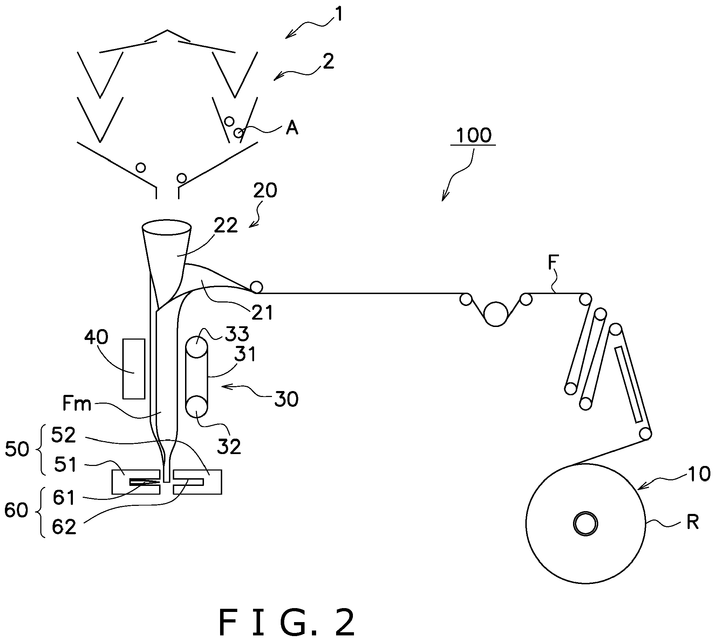

FIG. 1 is a perspective view of a packaging machine 1 including a bag-making and packaging machine 100 of this embodiment. FIG. 2 is a schematic diagram of the packaging machine 1 including the bag-making and packaging machine 100 of this embodiment. In FIG. 1 and FIG. 2, the packaging machine 1 includes a weighing machine 2 and the bag-making and packaging machine 100.

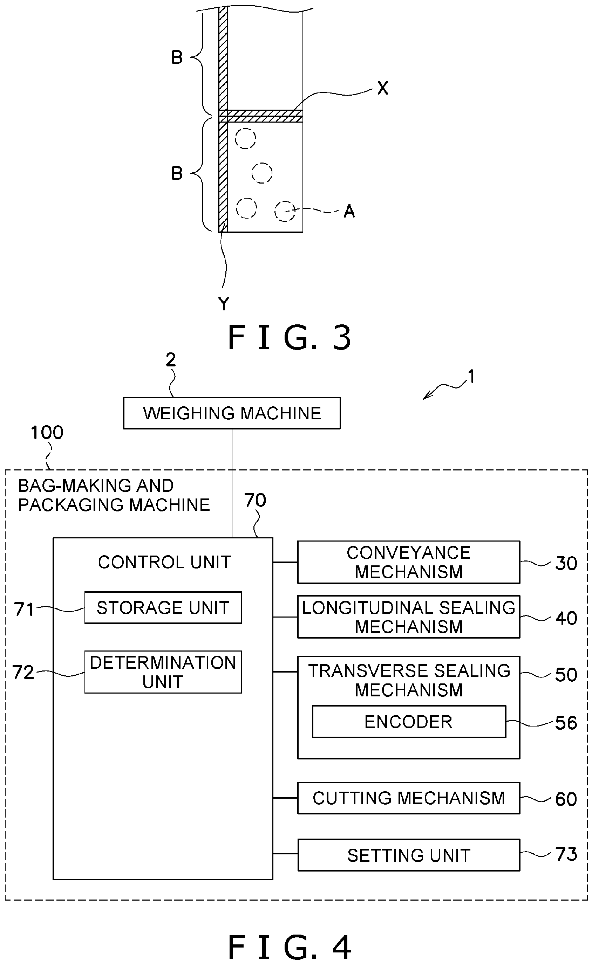

As shown in FIG. 1 and FIG. 2, the weighing machine 2 weighs one or more articles A that become put into each bag B. The articles A are not particularly limited; here, they are articles such as potato chips or chocolates, for example. The bag-making and packaging machine 100 is installed under the weighing machine 2. The bag-making and packaging machine 100 receives the articles A from the weighing machine 2 and packages the articles A in a film F that has been formed into a tubular shape (hereafter also called "the tubular film Fm") to thereby manufacture one or more bags B shown in FIG. 3. FIG. 3 is a schematic diagram of the bags B manufactured by the bag-making and packaging machine 100 of this embodiment, and shows two bags B.

The bag-making and packaging machine 100 includes a film supply mechanism 10, a forming mechanism 20, conveyance mechanism 30, a longitudinal sealing mechanism 40, a transverse sealing mechanism 50, and a cutting mechanism 60, which are shown in FIG. 1 and FIG. 2, and a control unit 70, which is shown in FIG. 4. It will be noted that FIG. 4 is a block diagram of the bag-making and packaging machine 100 of this embodiment.

The film supply mechanism 10 supplies a sheet-like film F that becomes made into the bags B to the forming mechanism 20. The forming mechanism 20 forms the sheet-like film F fed thereto into a tubular shape. The conveyance mechanism 30 convey downward the film F that has become a tubular shape (the tubular film Fm). The longitudinal sealing mechanism 40 longitudinally seals the tubular film Fm that has been formed into a tubular shape to thereby form a longitudinal seal portion Y shown in FIG. 3. The transverse sealing mechanism 50 seals upper and lower ends of the bags B by pinching and transversely sealing the tubular film Fm to form a transverse seal portion X shown in FIG. 3. The cutting mechanism 60 cuts the upper and lower ends of the bags B. The control unit 70 determines whether or not there is jamming in the transverse seal portion X and, in a case where it has determined that there is jamming, switches between a first bag-making process to continue bag-making operation and a second bag-making process to stop bag-making operation based on the state of jamming.

### (2-1) Film Supply Mechanism

The film supply mechanism 10 shown in FIG. 1 and FIG. 2 supplies the sheet-like film F to the forming mechanism 20. A film roll R in which the film F is wound is set in the film supply mechanism 10, and the film F is paid out from the film roll R. The material of the film F is not particularly limited and, for example, includes plastic material and paper material.

### (2-2) Forming Mechanism

The forming mechanism 20 is a forming mechanism that forms the sheet-like film F into a tubular shape. As shown in FIG. 2, the forming mechanism 20 has a sailor collar 21 and a tube 22. The tube 22 extends in the up and down direction. The tube 22 is a partially tubular member, and its upper and lower ends are open. The articles A weighed by the weighing machine 2 are input to the opening in the upper end of the tube 22.

The sailor collar 21 is disposed surrounding the tube 22. The sheet-like film F supplied from the film supply mechanism 10 is formed into a tubular shape when it passes between the sailor collar 21 and the tube 22. The sailor collar 21 and the tube 22 can be replaced in accordance with the size of the bags B that are manufactured.

### (2-3) Conveyance Mechanism

The conveyance mechanism 30 conveys the tubular film Fm. Here, the conveyance mechanism 30 conveys the film F pulled out from the film roll R to the sailor collar 21. Furthermore, the conveyance mechanism 30 conveys the tubular film Fm formed by the sailor collar 21 to the transverse sealing mechanism 50. The conveyance mechanism 30 sucks hold of, and convey downward, the tubular film Fm wrapped around the tube 22.

The conveyance mechanism 30 is disposed under the sailor collar 21. Furthermore, the conveyance mechanism 30 is disposed on the left side (not shown in the drawings) and the right side of the tube 22 respectively.

The conveyance mechanism 30 each has a belt 31, a drive roller 32, and a follower roller 33. The belt 31 has a sucking function. The belt 31 is entrained about the drive roller 32 and the follower roller 33. The drive roller 32 is coupled to a roller drive motor (not shown in the drawings) and is driven by the roller drive motor. When the drive roller 32 is driven by the drive motor in a state in which the belt 31 is sucking hold of the film F, the tubular film Fm is conveyed downward.

### (2-4) Longitudinal Sealing Mechanism

The longitudinal sealing mechanism 40 seals an overlapping portion of the tubular film Fm in the longitudinal direction (the up and down direction in FIG. 2) to form the longitudinal seal portion Y shown in FIG. 3. The longitudinal sealing mechanism 40 longitudinally seals the overlapping portion of the tubular film Fm wrapped around the tube 22 by applying heat to the overlapping portion while pressing it with a predetermined pressure against the tube 22.

The longitudinal sealing mechanism 40 is positioned on the front-facing (front) side of the tube 22 and has a heater and a heater belt that is heated by the heater and contacts the seam of the tubular film Fm. The longitudinal sealing mechanism 40 also has a drive device (not shown in the drawings) for moving the heater belt toward and away from the tube 22.

### (2-5) Transverse Sealing Mechanism

The transverse sealing mechanism 50 is disposed under the tube 22. The transverse sealing mechanism 50 transversely seals the tubular film Fm in a direction intersecting (in FIG. 2, orthogonal to) the conveyance direction of the tubular film Fm. Here, the transverse sealing mechanism 50 seals the bags B by sealing, in the transverse direction, the portion of the tubular film Fm that becomes the upper and lower ends of the bags.

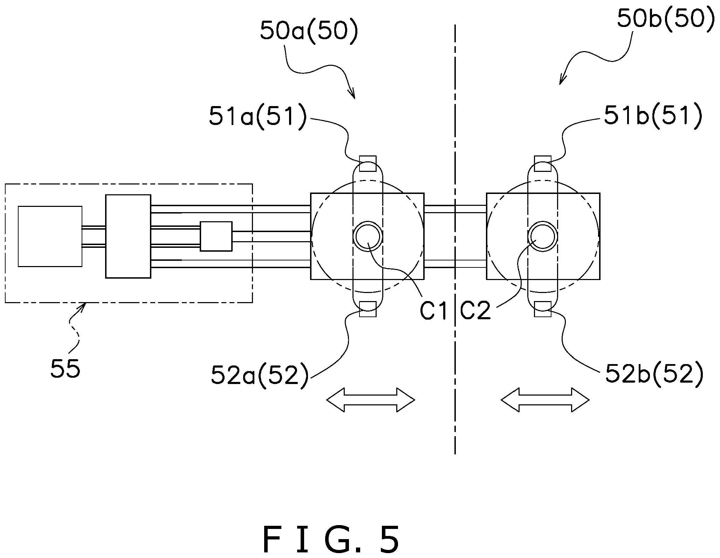

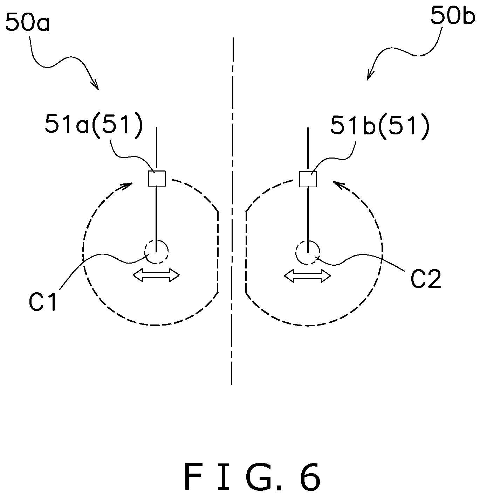

FIG. 5 is a side view of the transverse sealing mechanism 50. FIG. 6 is a side view of paths traced by sealing jaws 51, 52. In FIG. 5, the transverse sealing mechanism 50 includes a first sealing mechanism 50a and a second sealing mechanism 50b. It will be noted that the first sealing mechanism 50a is the one positioned on the left side of the tubular film Fm in FIG. 5 and the second sealing mechanism 50b is the one positioned on the right side.

The first sealing mechanism 50a and the second sealing mechanism 50b pinch the tubular film Fm while their sealing jaws 51, 52 are made to revolve in D-shapes (e.g., see the paths of the sealing jaws indicated by dashed lines in FIG. 6).

The sealing jaws 51, 52 have heaters inside. Sealing surfaces of the sealing jaws 51, 52 are heated by the heaters, and the part of the tubular film Fm pinched by the sealing jaws 51, 52 is sealed.

Here, for convenience of description, the sealing jaw 51 of the first sealing mechanism 50a will be called a first sealing jaw 51a and the sealing jaw 51 of the second sealing mechanism 50b will be called a second sealing jaw 51b. The first sealing jaw 51a and the second sealing jaw 51b push against each other with the tubular film Fm between them and seal the tubular film Fm.

Similarly, the sealing jaw 52 of the first sealing mechanism 50a will be called a first sealing jaw 52a and the sealing jaw 52 of the second sealing mechanism 50b will be called a second sealing jaw 52b. The first sealing jaw 52a and the second sealing jaw 52b push against each other with the tubular film Fm between them and seal the tubular film Fm.

It will be noted that when referring to matters common to all the sealing jaws, the sealing jaws are called "the sealing jaws 51, 52."

The sealing jaws 51, 52 are rotated about axes C1, C2 by drive motors (not shown in the drawings). That is, the first sealing jaws 51a, 52a rotate about an axis C1, and the second sealing jaws 51b, 52b rotate about an axis C2.

Furthermore, as shown in FIG. 5, the transverse sealing mechanism 50 is provided with a transverse direction drive mechanism 55 that reciprocally moves the transverse sealing mechanism 50. The transverse direction drive mechanism 55 is, for example, a servo motor.

The transverse sealing mechanism 50 also includes an encoder 56 shown in FIG. 4. The encoder 56 detects the amount of movement of the transverse direction drive mechanism 55.

### (2-6) Cutting Mechanism

The cutting mechanism 60 shown in FIG. 2 cuts the transverse seal portion X shown in FIG. 3. Specifically, the cutting mechanism 60 cuts the tubular film Fm at the transverse seal portion X that is an end portion of the bag B.

As shown in FIG. 2, the cutting mechanism 60 is provided in the transverse sealing mechanism 50. The cutting mechanism 60 includes a cutter 61 and a receiver 62. The cutter 61 is provided in the first sealing jaws 51. The receiver 62 is provided in the second sealing jaws 52. The cutter 61 can be extended and retracted. The extended cutter 61 is received in the receiver 62. By extending the cutter 61, the tubular film Fm is cut in the transverse direction at the transverse seal portion X in the middle of the conveyance direction of the tubular film Fm.

### (2-7) Control Unit

The control unit 70 shown in FIG. 4 controls the operation of the conveyance mechanism 30, the longitudinal sealing mechanism 40, the transverse sealing mechanism 50, and the cutting mechanism 60. Furthermore, the control unit 70 sends commands relating to the operation of the weighing machine 2 to a control unit of the weighing machine 2.

The control unit 70 is realized by a computer. The control unit 90 includes a control arithmetic unit and a storage device. For the control arithmetic unit, a processor such as a CPU or a GPU can be used. The control arithmetic unit reads programs stored in the storage device and performs predetermined image processing and arithmetic processing in accordance with the programs. Moreover, the control arithmetic unit can write arithmetic results to the storage device and read information stored in the storage device in accordance with the programs.

The control unit 70 includes a storage unit 71 and a determination unit 72 as shown in FIG. 4. The storage unit 71 has plural determination values relating to the state of jamming. The determination unit 72 determines whether or not there is jamming in the transverse seal portion X and, in a case where it has determined that there is jamming, switches between a first bag-making process to continue bag-making operation and a second bag-making process to stop bag-making operation based on the state of jamming. Here, the determination unit 72 switches between the first bag-making process and the second bag-making process based on at least two determination values. The first bag-making process and the second bag-making process differ from the normal bag-making process.

It will be noted that "jamming in the transverse seal portion X" means that a transverse seal portion X having in it something that is normally not there ends up being formed in the tubular film Fm as a result of something that is normally not there (e.g., an article A, etc.) getting caught when the transverse seal portion X is formed.

### (2-7-1) Storage Unit

The storage unit 71 has plural determination values relating to the state of jamming. The storage unit 71 stores plural determination criteria calculated by acquiring information from the transverse sealing mechanism 50.

In this embodiment, the storage unit 71 has a first determination value for performing the first bag-making process (a process for discharging a chain bag) and a second determination value for performing the second bag-making process (a process for stopping bag-making). In other words, the storage unit 71 has a first determination value for determining a first jamming state and a second determination value for determining a second jamming state. The first determination value is a threshold value for determining that something relatively small is entrapped. Cases where something relatively small is entrapped are cases where the effect on quality will be small if bag-making operation are continued. Examples of jamming of something relatively small include jamming of the bag (the tubular film Fm), such as a tuck, and jamming of small articles like powder such as seasoning for the articles A and small articles such as, for example, powder configuring part of the articles A. The second determination value is a threshold value for determining that something relatively large is entrapped. Cases where something relatively large is entrapped are cases where the effect on quality will be large if bag-making operation are continued. Examples of jamming of something relatively large include jamming of a large article such as a potato chip or a chocolate as the article A.

### (2-7-2) Determination Unit

The determination unit 72 determines whether or not an article A or the like is entrapped in the transverse seal portion X based on the plural determination values when the transverse sealing mechanism 50 performs the transverse sealing. Here, the determination unit 72 reads the first determination value and the second determination value from the storage unit 71, determines whether or not there is jamming, and, in a case where there is jamming, further determines the state of jamming.

When the determination unit 72 determines that there is jamming of the first jamming state in accordance with the first determination value which is predetermined, the determination unit 72 performs, as the first bag-making process, a process to cease the cutting of the transverse seal portion X by the cutting mechanism 60 and manufacture a chain bag in which a plurality of bags are interconnected. The chain bag is easily discriminated as a defective product because its length differs from the length of a normal bag B. The chain bag is not limited as long as it is longer than the length of the normal bag B, but preferably it is a chain bag in which two or more bags B are interconnected; here, it is a chain bag in which two bags B are interconnected. In this case, the determination unit 72 sends to the cutting mechanism 60 a command to cease the cutting of the transverse seal portion X one time.

Furthermore, the determination unit 72 performs, as the second bag-making process, a process to stop bag-making operation in accordance with the second determination value which is predetermined. In this case, the determination unit 72 sends commands to cease operation to the weighing machine 2, the conveyance mechanism 30, the longitudinal sealing mechanism 40, the transverse sealing mechanism 50, and the cutting mechanism 60.

At least one of the first bag-making process and the second bag-making process includes a process to change the bag-making capacity. Here, at least one of the first bag-making process and the second bag-making process includes a process to automatically change the bag-making capacity. That is, the determination unit 72 performs a process to change the bag-making capacity after it has performed a process to manufacture a chain bag as the first bag-making process and/or after it has performed a process to stop bag-making operation as the second bag-making process. In this embodiment, when the determination unit 72 determines that there is jamming of something relatively small, the determination unit 72 performs a process to manufacture a chain bag as the first bag-making process and thereafter changes the bag-making capacity based on settings in a setting unit 73 described later.

Changing the bag-making capacity includes, for example, changing the number of bags B manufactured per minute, changing the timing when the articles A are input from the upstream weighing machine 2, and changing the timing when the transverse seal portion X is formed by the transverse sealing mechanism 50.

### (2-7-3) Specific Example

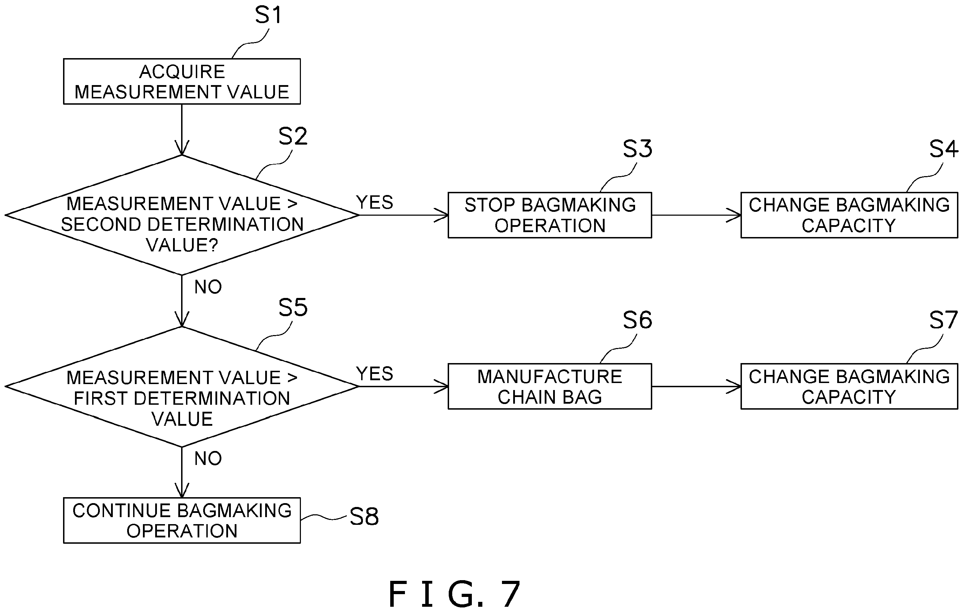

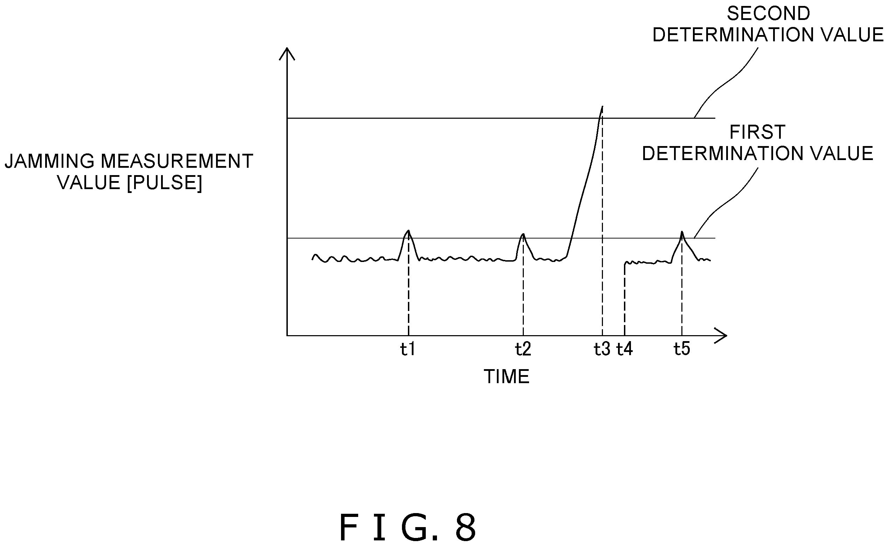

Here, with reference to FIG. 7 and FIG. 8, an example will be described where the control unit 70 determines the state of jamming based on the amount of movement of the servo motor serving as the transverse direction drive mechanism 55 that drives the sealing jaws 51, 52 that pinch the tubular film Fm during transverse sealing, that is, the pulse number (jamming measurement value) detected by the encoder 56, as the plural determination values. FIG. 7 is a flowchart showing control steps executed by the control unit 70. FIG. 8 is a drawing for describing control by the control unit 70. In FIG. 8, the horizontal axis represents elapsed time and the vertical axis represents the jamming measurement value (unit: pulse) when transverse sealing has been performed.

The storage unit 71 has the first determination value for determining that something relatively small, such as the tubular film Fm is entrapped (a tuck) and the second determination value for determining that something relatively large, like an article A such as a chocolate and not powder, is entrapped. The first determination value and the second determination value are set based on average values of measurement values of the transverse seal portion X before normal bag-making operation (during a test run), for example.

It will be noted that the determination unit 72 can also read the first determination value and the second determination value from the storage unit 71 and, during normal bag-making operation (running) of the bag-making and packaging machine 100, correct the first determination value and the second determination value from moving average values of each transverse seal portion X.

When something relatively large is entrapped when the transverse seal portion X is formed, the torque of the servo motor becomes larger and the pulse number becomes larger. When something relatively small is entrapped when the transverse seal portion X is formed, the torque of the servo motor becomes smaller and the pulse number becomes smaller. For this reason, the second determination value for determining that something relatively large is entrapped is greater than the first determination value for determining that something relatively small is entrapped.

As shown in FIG. 7, the determination unit 72 acquires the jamming measurement value from the encoder 56 when the transverse seal portion X has been formed (step S1) and determines whether or not the jamming measurement value exceeds the first determination value and the second determination value (steps S2 and S5).

Here, the determination unit 72 determines whether or not the jamming measurement value is greater than the second determination value (step S2). When the acquired jamming measurement value exceeds the second determination value in step S2 (time t3 in FIG. 8), the determination unit 72 determines that an article A is entrapped and performs, as the second bag-making process, a process to stop bag-making operation (step S3). After bag-making operation is stopped (step S3), the user can, for example, clean the sealing jaws 51, 52 and the cutter 61. Then, the control unit 70 resumes bag-making operation. At this time (t4 in FIG. 8), the determination unit 72 changes the bag-making capacity (step S4). In step S4, the determination unit 72 changes the timing when the transverse seal portion X is formed by the transverse sealing mechanism 50.

It will be noted that the determination unit 72 can also change the first determination value and the second determination value after bag-making operation has resumed. Here, considering that the tubular film Fm becomes stiffer due to bag-making operation being stopped, the determination unit 72 sets the first determination value and the second determination value higher than they were before bag-making operation was stopped.

Next, the determination unit 72 determines whether or not the jamming measurement value is greater than the first determination value (step S5). When the acquired jamming measurement value is equal to or less than the second determination value and exceeds the first determination value (times 11, t2, and t5 in FIG. 8) in step S5, the determination unit 72 determines that, for example, there is a tuck in the transverse seal portion X and performs, as the first bag-making process, a process to cease the cutting of the transverse seal portion X by the cutting mechanism 60 and manufacture a chain bag in which a plurality of bags B are interconnected (step S6). Thereafter, the determination unit 72 lowers the bag-making capacity based on settings in the setting unit 73 without stopping bag-making operation (step S7). In step S7, the determination unit 72 sends a command to the weighing machine 2, the conveyance mechanism 30, the longitudinal sealing mechanism 40, the transverse sealing mechanism 50, and the cutting mechanism 60 to reduce the number of bags B manufactured per minute.

When the acquired jamming measurement value is equal to or less than the first determination value in step S5, the determination unit 72 determines that there is not jamming and continues normal bag-making operation (step S8).

### (2-8) Setting Unit

The setting unit 73 sets the bag-making capacity. Here, the setting unit 73 sets how the bag-making capacity is to be changed after at least one of the first bag-making process and the second bag-making process has been performed by the control unit 70.

The setting unit 73 is an operation member to which the user can input information and the like, such as a touch panel for example. The setting unit 73 of this embodiment can also set bag-making operation of the bag-making and packaging machine 100 and at least two determination values. The setting unit 73 sends to the control unit 70 the information that has been set.

### (3) Operation of Bag-making and Packaging Machine

As shown in FIG. 1 and FIG. 2, the sheet-like film F supplied from the film supply mechanism 10 is conveyed by the conveyance mechanism 30 to the forming mechanism 20. In the forming mechanism 20, the sheet-like film F is passed through a gap between the sailor collar 21 and the tube 22. The sheet-like film F is bent into a tubular shape by the sailor collar 21, and the film F formed into a tubular shape is guided by the tube 22.

Meanwhile, the articles A weighed by the weighing machine 2 are sequentially dropped into the upper open end of the tube 22. At this time, the outer periphery of the tube 22 is covered by the tubular film Fm for packaging the articles A.

The tubular film Fm formed by the forming mechanism 20 is conveyed downward by the conveyance mechanism 30, and the overlapping portion of the tubular film Fm is sealed in the longitudinal direction by the longitudinal sealing mechanism 40. The tubular film Fm in which the longitudinal seal portion Y has been formed by the longitudinal sealing mechanism 40 is conveyed further downward by the conveyance mechanism 30, and the portion of the tubular film Fm that becomes the upper and lower ends of the bags B is sealed in the transverse direction by the transverse sealing mechanism 50. The bag B in which the transverse seal portion X has been formed by the transverse sealing mechanism 50 is cut in the transverse direction at the transverse seal portion X by the cutter 61 of the cutting mechanism 60, whereby the bag B is manufactured.

When the transverse sealing mechanism 50 performs the transverse sealing, the control unit 70 determines whether or not there is jamming in the transverse seal portion X and, in a case where it has determined that there is jamming, switches between the first bag-making process to continue bag-making operation and the second bag-making process to stop bag-making operation based on the state of jamming. Bags B that have been determined by the control unit 70 to not have jamming in their transverse seal portion X are regarded as products. Bags B that have been determined by the control unit 70 to have something small entrapped in their transverse seal portion X are manufactured as a chain bag as the first bag-making process and removed as defective products. Furthermore, bags B that have been determined by the control unit 70 to have something large entrapped in their transverse seal portion X are removed as defective products, with bag-making operation by the bag-making and packaging machine 100 being stopped as the second bag-making process.

### (4) Characteristics

(4-1)
The bag-making and packaging machine 100 pertaining to this embodiment forms the sheet-like film F into a tubular shape and transversely seals the film F to thereby manufacture bags containing the articles A, the bag-making and packaging machine 100 including the transverse sealing mechanism 50 and the control unit 70. The transverse sealing mechanism 50 pinches and transversely seals the tubular film Fm that has been formed into a tubular shape to form the transverse seal portion X. The control unit 70 determines whether or not there is jamming in the transverse seal portion X and, in a case where it has determined that there is jamming, switches between the first bag-making process to continue bag-making operation and the second bag-making process to stop bag-making operation based on the state of jamming.

When a large article A is entrapped when the transverse seal portion X is formed, the tubular film Fm may tear and the articles A may come out of the tubular film Fm and stick to the sealing jaws 51, 52 and the cutter 61. In this case, if the manufacturing of the bags B is continued, the articles A sticking to the sealing jaws 51, 52 and the cutter 61 stick to the bags B that are subsequently manufactured and the quality of the bags B is reduced. To inhibit this, in this embodiment, the control unit 70 performs the second bag-making process to stop bag-making operation in order to inhibit a reduction in quality caused by something large being entrapped in the transverse seal portion X. Specifically, when an article A is entrapped and the articles A come out of the tubular film Fm, the control unit 70 stops bag-making operation, so the user can clean the sealing jaws 51, 52 and the cutter 61. For this reason, the articles A can be inhibited from sticking to the bags B that are manufactured after something large is entrapped, so a reduction in the quality of the bags B that are manufactured can be inhibited.

If the second bag-making process is always performed in a case where there is jamming in the transverse seal portion X, the operating rate ends up becoming lower. To inhibit this, in this embodiment, the control unit 70 performs the first bag-making process to continue (not stop) bag-making operation in order to inhibit a reduction in the operating rate in a case where the effect on the quality of the bags B will be small even if the articles A stick to the sealing jaws 51, 52.

In this way, the bag-making and packaging machine 100 of this embodiment can perform the first bag-making process for inhibiting a reduction in the operating rate and the second bag-making process for inhibiting a reduction in quality based on the state of jamming. Consequently, a reduction in the quality of the bags B that are manufactured can be inhibited and a reduction in the operating rate of the bag-making and packaging machine 100 can be inhibited.

(4-2)
Furthermore, in this embodiment, the control unit 70 switches between the first bag-making process and the second bag-making process based on at least two determination values.

In this way, the control unit 70 has plural determination values relating to the state of jamming. For this reason, by setting a determination value for when something relatively large is entrapped and a determination value for when something relatively small is entrapped, the state of jamming can be easily determined based on the plural determination values.

Furthermore, by making the determination values smaller, small jamming can be detected. For this reason, in this embodiment, occurrences of small jamming can be detected.

(4-3)
Furthermore, in this embodiment, the bag-making and packaging machine 100 further includes the cutting mechanism 60 that cuts the transverse seal portion X. The control unit 70 performs, as the first bag-making process, a process to cease the cutting of the transverse seal portion X by the cutting mechanism 60 and manufacture a chain bag in which a plurality of bags B are interconnected.

Here, the control unit 70 manufactures a chain bag without stopping bag-making operation when the state of jamming is one where something relatively small is entrapped. In this way, in the case of a small jamming, a reduction in the operating rate can be inhibited because the control unit 70 continues bag-making operation. Furthermore, by making into a chain bag a bag B having something entrapped in its transverse seal portion, the bag B can be easily discriminated as a defective product and removed downstream.

(4-4)
Furthermore, in this embodiment, at least one of the first bag-making process and the second bag-making process includes a process to change the bag-making capacity.

Here, the control unit 70 performs a process to automatically change the bag-making capacity after it has performed a process to manufacture a chain bag as the first bag-making process and/or after it has performed a process to stop bag-making operation as the second bag-making process. Because of this, occurrences of jamming when the transverse seal portion X is formed thereafter can be reduced.

### (5) Example Modifications

Example modifications of the embodiment will be described below. It will be noted that some or all of the content of each example modification can also be combined with the content of the embodiment and/or the content of another example modification to the extent that they are not mutually incompatible.

### (5-1) Example Modification A

In the embodiment, the control unit 70 switches between two processes, the first bag-making process and the second bag-making process, based on the state of jamming, but the control unit of the invention is not limited to this and can also switch between three or more mutually different bag-making processes.

Furthermore, in the embodiment, the control unit 70 switches between the first bag-making process and the second bag-making process based on two determination values, but the control unit of the invention is not limited to this and can also have three or more determination values.

In this example modification, the control unit 70 has a third determination value for performing a third bag-making process different from the first and second bag-making processes. The control unit 70 performs the third bag-making process in accordance with the third determination value which is predetermined. The third bag-making process continues bag-making operation. Here, the control unit 70 performs, as the third bag-making process, a process to manufacture the bag B as a product and leave a history of the occurrence of jamming.

Specifically, the third determination value is smaller than the first determination value. The third determination value is set to determine a state in which something smaller than in the jamming determined by the first determination value is entrapped. In a case where the acquired jamming measurement value is equal to or less than the first and second determination values and exceeds the third determination value, the determination unit 72 discharges the bag B not as a defective product but as a product and causes the storage unit 71 to store a history of the occurrence of a small jamming. It will be noted that the determination unit 72 can also issue a notification that the acquired jamming measurement value is equal to or greater than the third determination value.

### (5-2) Example Modification B

In the embodiment, the first bag-making process is a process to cease the cutting of the transverse seal portion X by the cutting mechanism 60 and manufacture a chain bag in which a plurality of bags B are interconnected. In comparative example modifications not according to the invention, the first bag-making process continues normal bag-making operation for manufacturing the bags B without manufacturing a chain bag and displays an indication that the first determination value has been exceeded.

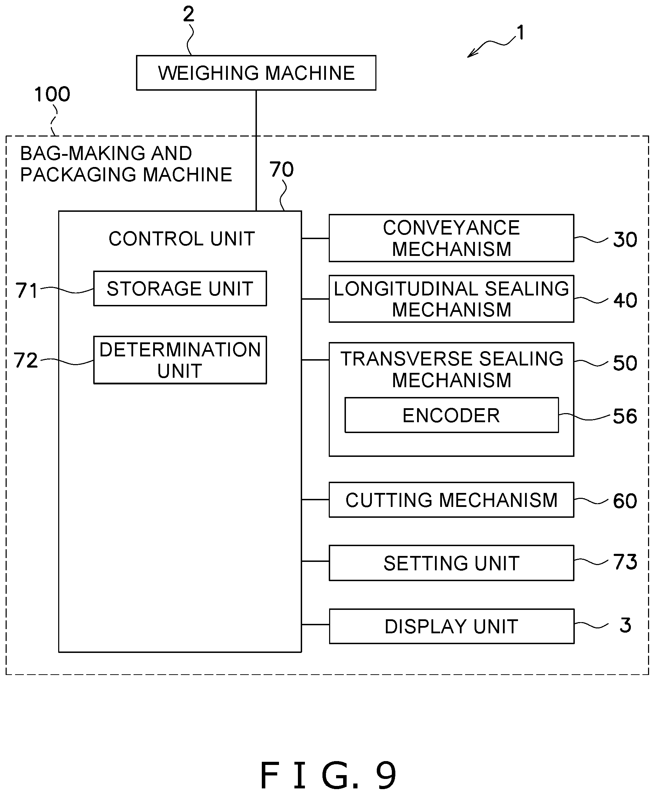

FIG. 9 is a block diagram of the bag-making and packaging machine of this example modification. In this comparative example modification, as shown in FIG. 9, the control unit 70 causes a display unit 3 to display an indication that the first determination value has been exceeded as the first bag-making process. Here, when the second determination value has been exceeded, the control unit 70 causes the display unit 3 to display an indication thereof.

Specifically, the bag-making and packaging machine 100 further includes the display unit 3 shown in FIG. 1. The display unit 3 is, for example, a touch panel. The display unit 3 can be a member different from the setting unit 73, but in this example modification they are the same member.

The control unit 70 sends a command to the display unit 3 to display an indication that the first determination value or the second determination value determined by the determination unit 72 of the control unit 70 has been exceeded. The display unit 3 receiving the command from the determination unit 72 displays a graph such as shown in FIG. 8. Specifically, the display unit 3 displays a line graph where the horizontal axis represents time and the vertical axis represents jamming measurement values of each bag B that has been manufactured.

It will be noted that the determination unit 72 can also display, instead of a graph, an error number or a message indicating that the first determination value or the second determination value has been exceeded.

The information displayed on the display unit 3 is left in a production record as a record of jamming occurrences. That is, the determination unit 72 causes the storage unit 71 to store a record of what it has determined.

It will be noted that the display unit 3 that displays an indication that the first determination value or the second determination value has been exceeded can be provided in the bag-making and packaging machine 100 or, rather than not being provided in the bag-making and packaging machine 100, can be a terminal device separate from the bag-making and packaging machine 100.

As described above, in this comparative example modification, the first bag-making process displays an indication that the first determination value has been exceeded. Because of this, different displays can be performed based on the state of jamming. For this reason, the user can be made aware of the state of jamming.

It will be noted that the first bag-making process can also continue bag-making operation for manufacturing a chain bag and display an indication that the first determination value has been exceeded.

### (5-3) Example Modification C

In example modification B, as the first bag-making process, the control unit 70 displays an indication and causes the storage unit 71 to store the record that the first determination value has been exceeded, but the control unit 70 is not limited to this. In this example modification, when the first determination value has been exceeded, the control unit 70 issues an alert indicating that.

### (5-4) Example Modification D

In the embodiment, the first bag-making process is a process to cease the cutting of the transverse seal portion X by the cutting mechanism 60 and manufacture a chain bag in which a plurality of bags B are interconnected. In this example modification, the control unit 70 prints a mark on the bag B as the first bag-making process.

Specifically, the bag-making and packaging machine 100 further includes a printing unit that prints a mark on the bag B. The bag B on which the mark has been printed can easily be discriminated as a defective product and removed downstream.

### (5-5) Example Modification E

In the embodiment and example modification D, the first bag-making process is a process to manufacture a chain bag in which a plurality of bags B are interconnected and a process to print a mark on the bag B, but the first bag-making process is not limited to this. In this example modification, as the first bag-making process, the control unit 70 discharges, to the outside of the path, a bag B in which jamming t has occurred.

Specifically, the packaging machine 1 includes a production line that conveys the bags B and a discharge unit that removes defective bags B from the production line. The packaging machine 1 also discharges, to the outside of the production line, bags B having something entrapped in their transverse seal portion. Because of this, defective bags B can be easily discovered.

### REFERENCE SIGNS LIST

- 1:: Packaging Machine
- 2:: Weighing machine
- 10:: Film Supply Mechanism
- 20:: Forming Mechanism
- 30:: Conveyance Mechanism
- 40:: Longitudinal Sealing Mechanism
- 50:: Transverse Sealing Mechanism
- 60:: Cutting Mechanism
- 70:: Control Unit
- 100:: Bag - making and Packaging Machine
- A:: Article (Articles)
- B:: Bag (Bags)
- F, Fm:: Film
- X:: Transverse Seal Portion
- Y:: Longitudinal Seal Portion

## Claims

1. A bag-making and packaging machine (1) that forms a sheet-like film into a tubular shape and transversely seals the film to manufacture a bag (B) containing an article (A), the bag-making and packaging machine comprising:
a transverse sealing mechanism (50) that pinches and transversely seals a tubular film to form a transverse seal portion (X);
a cutting mechanism (60) that cuts the transverse seal portion (X); and
a control unit (70) that determines whether or not there is jamming in the transverse seal portion (X) and, in a case where it has determined that there is jamming, switches between a first bag-making process to continue bag-making operation and a second bag-making process to stop bag-making operation based on a jamming state, **characterised in that** the control unit (70) performs, as the first bag-making process, a process to cease cutting of the transverse seal portion (X) by the cutting mechanism (60) and manufacture a chain bag in which a plurality of bags (B) are interconnected.

2. The bag-making and packaging machine of claim 1, wherein the control unit (70) switches between the first bag-making process and the second bag-making process based on at least two determination values.

3. The bag-making and packaging machine of claim 1 or 2, wherein at least one of the first bag-making process or the second bag-making process includes a process to change bag-making capacity.

4. The bag-making and packaging machine of claim 2, wherein
the at least two determination values include a first determination value and a second determination value, and
the first bag-making process displays an indication that the first determination value has been exceeded.

## Patentansprüche

1. Beutelherstellungs- und Verpackungsmaschine (1), die eine bahnförmige Folie in eine schlauchförmige Form bringt und die Folie quer versiegelt, um einen Beutel (B) herzustellen, der einen Artikel (A) aufnimmt, wobei die Beutelherstellungs- und Verpackungsmaschine aufweist:
einen Querversiegelungsmechanismus (50), der eine schlauchförmige Folie quetscht und querversiegelt, um einen Querversiegelungsabschnitt (X) zu bilden;
einen Schneidemechanismus (60), der den Quersiegelabschnitt (X) schneidet; und
eine Steuereinheit (70), die bestimmt, ob in dem Querversiegelungsabschnitt (X) eine Stauung vorliegt oder nicht, und in einem Fall, in dem sie bestimmt hat, dass eine Stauung vorliegt, zwischen einem ersten Beutelherstellungsprozess, um den Beutelherstellungsvorgang fortzusetzen, und einem zweiten Beutelherstellungsprozess umschaltet, um den Beutelherstellungsvorgang basierend auf einem Stauungszustand zu stoppen, **dadurch gekennzeichnet, dass** die Steuereinheit (70) als den ersten Beutelherstellungsprozess einen Prozess durchführt, um das Schneiden des Quersiegelabschnitts (X) durch den Schneidemechanismus (60) zu beenden und einen Kettenbeutel herzustellen, in dem mehrere Beutel (B) miteinander verbunden sind.

2. Beutelherstellungs- und Verpackungsmaschine nach Anspruch 1, wobei die Steuereinheit (70) zwischen dem ersten Beutelherstellungsprozess und dem zweiten Beutelherstellungsprozess basierend auf mindestens zwei Bestimmungswerten umschaltet.

3. Beutelherstellungs- und Verpackungsmaschine nach Anspruch 1 oder 2, wobei mindestens einer des ersten Beutelherstellungsprozesses oder des zweiten Beutelherstellungsprozesses einen Prozess zur Änderung der Beutelherstellungskapazität umfasst.

4. Beutelherstellungs- und Verpackungsmaschine nach Anspruch 2, wobei
die mindestens zwei Bestimmungswerte einen ersten Bestimmungswert und einen zweiten Bestimmungswert umfassen, und
der erste Beutelherstellungsprozesses eine Anzeige anzeigt, dass der erste Bestimmungswert überschritten wurde.

## Revendications

1. Machine de fabrication de sacs et de conditionnement (1) donnant à une pellicule stratiforme une forme tubulaire, et scellant transversalement la pellicule afin de produire un sac (B) contenant un article (A), la machine de fabrication de sacs et de conditionnement comprenant :
un mécanisme de scellement transversal (50) pinçant et scellant transversalement une pellicule tubulaire pour former une partie de scellement transversal (X) ;
un mécanisme de coupe (60) coupant la partie de scellement transversal (X) ; et
un module de commande (70) déterminant la présence éventuelle d'un blocage dans la partie de scellement transversal (X), et, dans l'éventualité où un blocage a été détecté, alternant entre un premier procédé de fabrication de sacs, afin de poursuivre l'opération de fabrication de sacs, et un deuxième procédé de fabrication de sacs, pour cesser l'opération de fabrication de sacs en raison d'un état de blocage, **caractérisé en ce que** le module de commande (70) effectue, dans le cadre du premier procédé de fabrication de sacs, un procédé de cessation de la coupe de la partie de scellement transversal (X) par le mécanisme de coupe (60), et de fabrication d'un sac en chaîne, dans le cadre duquel une pluralité de sacs (B) sont interconnectés.

2. Machine de fabrication de sacs et de conditionnement selon la revendication 1, le module de commande (70) alternant entre le premier procédé de fabrication de sacs et le deuxième procédé de fabrication de sacs en fonction d'au moins deux valeurs de détermination.

3. Machine de fabrication de sacs et de conditionnement selon la revendication 1 ou 2, au moins un du premier procédé de fabrication de sacs ou du deuxième procédé de fabrication de sacs comprenant un procédé de variation de la capacité de fabrication de sacs.

4. Machine de fabrication de sacs et de conditionnement selon la revendication 2,
les au moins deux valeurs de détermination comprenant une première valeur de détermination et une deuxième valeur de détermination, et
le premier procédé de fabrication de sacs affichant une indication d'après laquelle la première valeur de détermination a été dépassée.
